(19) Europäisches Patentamt
European Patent Office
Office européen des brevets

(11) **EP 3 975 329 A1**

(12) **EUROPEAN PATENT APPLICATION**
published in accordance with Art. 153(4) EPC

(43) Date of publication:
**30.03.2022 Bulletin 2022/13**

(21) Application number: **20937170.7**

(22) Date of filing: **30.06.2020**

(51) International Patent Classification (IPC):
***H01M 50/293*** (2021.01)

(52) Cooperative Patent Classification (CPC):
**H01M 50/293**

(86) International application number:
**PCT/CN2020/099432**

(87) International publication number:
**WO 2022/000314 (06.01.2022 Gazette 2022/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Limited
Ningde, Fujian 352100 (CN)**

(72) Inventors:
- **ZHANG, Yibo
  Ningde
  Fujian 352100 (CN)**
- **YAN, Kun
  Ningde
  Fujian 352100 (CN)**
- **HU, Qiaoshu
  Ningde
  Fujian 352100 (CN)**
- **ZHANG, Nan
  Ningde
  Fujian 352100 (CN)**

(74) Representative: **Icosa
83 avenue Denfert-Rochereau
75014 Paris (FR)**

(54) **SEPARATOR FOR ELECTROCHEMICAL DEVICE, ELECTROCHEMICAL DEVICE AND ELECTRONIC DEVICE**

(57)     A partition plate for use in an electrochemical device, an electrochemical device, and an electronic device are disclosed. The partition plate for use in an electrochemical device is ion-insulative and includes an intermediate layer and a sealing layer. The sealing layer is located on an upper surface and a lower surface of the intermediate layer. A material of the intermediate layer includes at least one of a carbon material, a first polymer material, or a metal material. A material of the sealing layer includes a second polymer material. A temperature at which the sealing layer starts to soften is at least 10 °C lower than a temperature at which the intermediate layer starts to soften. Three layers of superimposed composite films ensure ion insulation and sealing reliability.

FIG. 1

**Description**

**TECHNICAL FIELD**

The present invention relates to the field of batteries, and in particular, to a partition plate for use in electrochemical device, an electrochemical device, and an electronic device.

**BACKGROUND**

Lithium-ion batteries are widely used in the field of consumer electronics by virtue of many advantages such as high volumetric and gravimetric energy densities, a long cycle life, a high nominal voltage, a low self-discharge rate, a small size, and a light weight. In recent years, with rapid development of electric vehicles and portable electronic devices, people are posing higher requirements on the energy density, safety, cycle performance, and the like of the battery, and are expecting the rollout of a new lithium-ion battery with overall performance enhanced comprehensively.

However, as limited by an inherent electrochemical system, usually the working voltage of a single lithium-ion battery can hardly exceed 5 V. However, in practical use of the lithium-ion battery, high-voltage application scenarios are enormously required, for example, the application scenarios of EV (electric vehicle, electric vehicle) and ESS (energy storage system, energy storage system). To increase the output voltage of the lithium-ion battery, a plurality of electrode assemblies are usually assembled in series in existing technologies. In a conventional electrode assembly in which the electrolytic solution is liquid, an ion insulation function needs to be implemented for serial-connected cavities in a serial-connected structure of the electrode assembly to avoid an internal short circuit between a positive electrode and a negative electrode that possess different potentials under the liquid condition. It is also necessary to avoid failure of decomposition of the conventional liquid-state electrolytic solution under a high voltage. In addition, as a part of a sealing structure, a partition plate needs to meet given requirements of parameters such as mechanical strength, thickness, thermal stability, and electrochemical stability. In view of this, a conventional single basic material can hardly meet the requirements of being used as a partition plate between serial-connected electrode assemblies, and a new partition plate needs to be developed to implement serial-connection isolation of an individual battery. Currently, typical methods for preparing a partition plate are: (i) compounding a layer of sealing material on the surface of a high-temperature-resistant dense isolation material for a purpose of sealing; and (ii) modifying the surface of the high-temperature-resistant dense isolation material so that the isolation material can closely bond with an outer package directly to implement sealing.

However, the partition plate made by using the foregoing first method in the prior art is generally a multilayer stack of similar polymer materials so that the overall thickness is relatively large. The material itself is prone to structural breakage under high-temperature sealing conditions, and the ion isolation performance is poor. The partition plate made by using the foregoing second method is difficult to be sealed reliably with the outer package, and is difficult to apply in practical scenarios.

**SUMMARY**

An objective of the present invention is to provide a partition plate for use in an electrochemical device, an electrochemical device, and an electronic device to improve sealing reliability of a lithium-ion battery.

A first aspect of the present invention provides a partition plate for use in an electrochemical device. The partition plate is ion-insulative and includes an intermediate layer and a sealing layer. The sealing layer is located on an upper surface and a lower surface of the intermediate layer.

A material of the intermediate layer includes at least one of a carbon material, a first polymer material, or a metal material.

A material of the sealing layer includes a second polymer material.

A temperature at which the sealing layer starts to soften is at least 10 °C lower than a temperature at which the intermediate layer starts to soften.

In an embodiment of the present invention, peripheral edges of the two surfaces of the intermediate layer are overlaid with the sealing layer, and an area of the sealing layer is 30% to 100% of an area of the intermediate layer.

In an embodiment of the present invention, at least one surface of the intermediate layer is fully overlaid with the sealing layer.

In an embodiment of the present invention, the carbon material includes at least one of: carbon felt, carbon film, carbon black, acetylene black, fullerene, conductive graphite film, or graphene film.

In an embodiment of the present invention, the first polymer material includes at least one of: polyethylene terephthalate, polybutylene terephthalate, polyethylene glycol naphthalate, polyether ether ketone, polyimide, polyamide, polyethylene glycol, polyamide imide, polycarbonate, cyclic polyolefin, polyphenylene sulfide, polyvinyl acetate, polytetrafluoroethylene, polymethylene naphthalene, polyvinylidene difluoride, polyethylene naphthalate, polypropylene carbonate, poly(vinylidene difluoride-hexafluoropropylene), poly(vinylidene difluoride-cochlorotrifluoroethylene), organosilicon, vinylon, polypropylene, acid anhydride modified polypropylene, polyethylene, ethylene and a copolymer thereof, polyvinyl chloride, polystyrene, polyether nitrile, polyurethane, polyphenylene ether, polyester, polysulfone, amorphous $\alpha$-olefin copolymer, or a derivative of the foregoing substances.

In an embodiment of the present invention, the metal material includes at least one of Ni, Ti, Ag, Au, Pt, Fe, Co, Cr, W, Mo, Pb, In, Zn, or stainless steel.

In an embodiment of the present invention, the second polymer material includes at least one of: polypropylene, acid anhydride modified polypropylene, polyethylene, ethylene and a copolymer thereof, polyvinyl chloride, polystyrene, polyether nitrile, polyurethane, polyamide, polyester, amorphous $\alpha$-olefin copolymer, or a derivative of the foregoing substances.

A second aspect of the present invention provides an electrochemical device. The electrochemical device includes at least one partition plate described above, at least two electrode assemblies, an electrolytic solution, and an outer package, and the electrode assemblies are located in an independent hermetic chamber.

In an embodiment of the present invention, an outermost layer of the electrode assemblies contains a separator, and the separator is adjacent to the partition plate.

In an embodiment of the present invention, an outermost layer of at least one of the electrode assemblies contains a separator, and the separator is adjacent to the partition plate. An outermost layer of at least one of the electrode assemblies contains a current collector, and the current collector is adjacent to the other side of the partition plate.

In an embodiment of the present invention, the partition plate is electronically conductive. An outermost layer of the electrode assemblies contains a current collector. The current collector is adjacent to the partition plate. Current collectors of the electrode assemblies at two sides of the partition plate possess opposite polarities.

In an embodiment of the present invention, the partition plate is electronically insulative. An outermost layer of the electrode assemblies contains a current collector. The current collector is adjacent to the partition plate.

A third aspect of the present invention provides an electronic device. The electronic device includes the electrochemical device according to the second aspect.

In the partition plate for use in an electrochemical device, the electrochemical device, and the electronic device provided in the present invention, the partition plate for use in an electrochemical device is ion-insulative and includes an intermediate layer and a sealing layer. The sealing layer is located on an upper surface and a lower surface of the intermediate layer. The material of the intermediate layer includes at least one of a carbon material, a first polymer material, or a metal material. The material of the sealing layer includes a second polymer material. The temperature at which the sealing layer starts to soften is at least 10 °C lower than the temperature at which the intermediate layer starts to soften. Three layers of superimposed composite films ensure ion insulation and sealing reliability.

## BRIEF DESCRIPTION OF DRAWINGS

To describe the technical solutions in the embodiments of the present invention and the prior art more clearly, the following outlines the drawings to be used in the embodiments of the present invention or the prior art. Apparently, the drawings outlined below are merely some embodiments of the present invention, and a person of ordinary skill in the art may derive other drawings from such drawings without making any creative efforts.

FIG. 1 is a cross-sectional schematic view of a partition plate according to an embodiment of the present invention;
FIG. 2 is a cross-sectional schematic view of a partition plate according to another embodiment of the present invention;
FIG. 3 is a schematic top view of a partition plate according to an embodiment of the present invention;
FIG. 4 is a cross-sectional schematic view of sealed electrode assemblies according to an embodiment of the present invention;
FIG. 5 is a schematic diagram of an electrochemical device according to Comparative Embodiment 2 of the present application;
FIG. 6 is a schematic diagram of an electrochemical device according to Comparative Embodiment 3 of the present application; and
FIG. 7 is a schematic diagram of an electrochemical device according to Comparative Embodiment 4 of the present application.

## DETAILED DESCRIPTION OF EMBODIMENTS

To make the objectives, technical solutions, and advantages of the present invention clearer, the following describes the present invention in more detail with reference to drawings and embodiments. Evidently, the described embodiments are merely a part of but not all of the embodiments of the present invention. All other embodiments derived by a person of ordinary skill in the art based on the embodiments of the present invention without making any creative efforts fall within the protection scope of the present invention.

It needs to be noted that in specific embodiments of the present invention, the present invention is construed by using a lithium-ion battery as an example of the electrochemical device, but the electrochemical device according to the present invention is not limited to the lithium-ion battery.

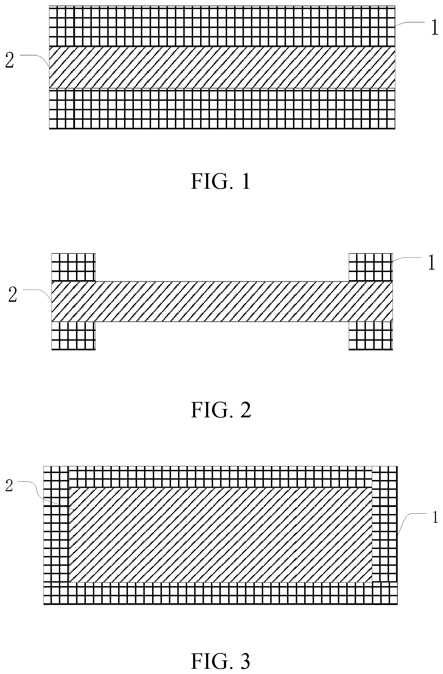

As shown in FIG. 1, the present invention provides a partition plate for use in an electrochemical device. The partition plate is ion-insulative and includes an intermediate layer 2 and a sealing layer 1. The sealing layer 1 is located on an upper surface and a lower surface of the intermediate layer 2.

A material of the intermediate layer 2 includes at least one of a carbon material, a first polymer material, or a metal material.

A material of the sealing layer 1 includes a second polymer material.

A temperature at which the sealing layer 1 starts to soften (melting point or softening point) is at least 10 °C lower than a temperature at which the intermediate layer starts to soften.

In the partition plate for use in an electrochemical device, the intermediate layer is a structural layer, and possesses high mechanical strength, a high melting point or a high softening point. The sealing layer is located at two sides of the intermediate layer. The sealing layer possesses a low melting point or a low softening point. Both the intermediate layer and the sealing layer possess advantages of high ion insulativity, appropriate thermal stability, and thin thickness. The temperature at which sealing layer starts to soften is at least 10 °C lower than the temperature at which intermediate layer starts to soften, thereby ensuring sealing reliability and effectiveness of ion insulation. The partition plate may be made by hot-pressing and compounding three layers of different films, or may be made by coating the intermediate layer with the sealing layer on both sides of the intermediate layer.

As shown in FIG. 2, in an embodiment of the present invention, the peripheral edges of two surfaces of the intermediate layer 2 are overlaid with the sealing layer 1. That is, a main surface portion of the intermediate layer 2 is not overlaid with the sealing layer. FIG. 3 is a schematic top view of this embodiment. The area of the sealing layer is 30% to 100% of the area of the intermediate layer, and an absolute width of the sealing layer is greater than 2 mm.

The peripheral edges of the two surfaces of the intermediate layer are overlaid with the sealing layer, thereby reducing the coating amount and weight percent of the material of the sealing layer as far as possible, reducing the weight percent of inactive materials, and increasing the energy density of the electrode assemblies.

In an embodiment of the present invention, at least one surface of the intermediate layer is fully overlaid with the sealing layer.

In an embodiment of the present invention, the carbon material includes at least one of: carbon felt, carbon film, carbon black, acetylene black, fullerene, conductive graphite film, or graphene film.

In an embodiment of the present invention, the first polymer material includes at least one of: polyethylene terephthalate, polybutylene terephthalate, polyethylene glycol naphthalate, polyether ether ketone, polyimide, polyamide, polyethylene glycol, polyamide imide, polycarbonate, cyclic polyolefin, polyphenylene sulfide, polyvinyl acetate, polytetrafluoroethylene, polymethylene naphthalene, polyvinylidene difluoride, polyethylene naphthalate, polypropylene carbonate, poly(vinylidene difluoride-hexafluoropropylene), poly(vinylidene difluoride-cochlorotrifluoroethylene), organosilicon, vinylon, polypropylene, acid anhydride modified polypropylene, polyethylene, other types of ethylene and a copolymer thereof (such as EVA, EEA, EAA, or EVAL), polyvinyl chloride, polystyrene, other types of polyolefin, polyether nitrile, polyurethane, polyphenylene ether, polyester, polysulfone, amorphous $\alpha$-olefin copolymer, or a derivative of the foregoing substances.

The intermediate layer is made of a polymer material. The density of the polymer material is lower than that of a commonly used metal-based current collector material. Therefore, the weight of inactive materials is reduced, and the gravimetric energy density of the electrode assemblies is increased. Because the intermediate layer is made of a polymer material, the prepared partition plate is less likely to generate electrically conductive scraps than a metal-based current collector in a case of mechanical abuse (such as nail penetration, impact, and extrusion), and is more effective in wrapping a mechanically broken surface. Therefore, the partition plate can improve a safety boundary in the case of mechanical abuse and increase the safety test pass rate.

In an embodiment of the present invention, the metal material includes at least one of Ni, Ti, Ag, Au, Pt, Fe, Co, Cr, W, Mo, Pb, In, Zn, or stainless steel, and preferably, includes at least one of Ni, Ti, Ag, Au, Pt, Fe, or stainless steel.

In an embodiment of the present invention, the second polymer material includes at least one of: polypropylene, acid anhydride modified polypropylene, polyethylene, other types of ethylene and a copolymer thereof (such as EVA, EEA, EAA, and EVAL), polyvinyl chloride, polystyrene, other types of polyolefin, polyether nitrile, polyurethane, polyamide, polyester, amorphous $\alpha$-olefin copolymer, or a derivative of the foregoing substances. In an embodiment of the present invention, a thickness of the partition plate is 2 μm to 500 μm, preferably 5 μm to 50 μm, and more preferably, 5 μm to 20 μm.

In an embodiment of the present invention, the temperature at which the material of the intermediate layer starts to soften is higher than 130 °C, and preferably, higher than 150 °C.

In an embodiment of the present invention, the temperature at which the material of the sealing layer starts to soften is 120 °C to 240 °C, and preferably, 130 °C to 170 °C.

It needs to be noted that when the first polymer material is selected as the intermediate layer, the material of the intermediate layer may be the same as or different from the material of the sealing layer of the partition plate prepared in the present invention. When the material of the intermediate layer is the same as the material of the sealing layer, for example, both materials are PP (polypropylene), it is necessary to ensure that the difference between the temperature at which the intermediate layer starts to soften and the temperature at which the sealing layer starts to soften is at least 20 °C.

In an embodiment of the present invention, an interfacial bonding force between the sealing layer and the intermediate layer is greater than 10 N/cm, and preferably greater than 20 N/cm.

In an embodiment of the present invention, the interfacial bonding force between the sealing layer and an outer package is greater than 10 N/cm, and preferably greater than 15 N/cm.

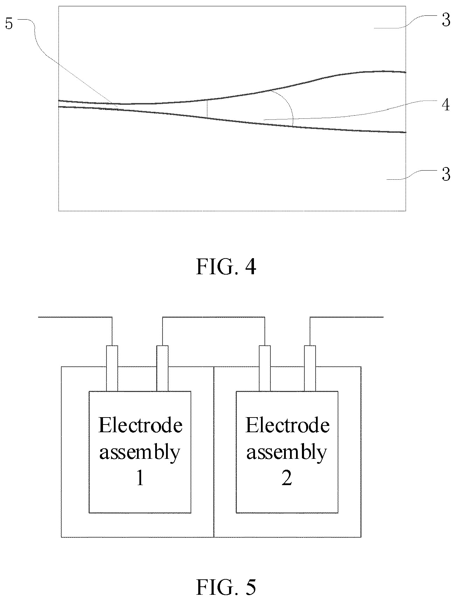

In an embodiment of the present invention, a ratio A of a cross-sectional area of the sealing layer in an unsealed adhesive overflow region to a cross-sectional area of the sealing layer in a sealed region is 0 to 20, preferably 0.5 to 5, and more preferably 0.5 to 2. Two tabs of a lithium-ion battery are cut through at a middle position of each tab to obtain a cross section. A SEM (scanning electron microscope) test is performed to calculate the area of the adhesive overflow region and the area of the sealed region in an SEM image. The area of the adhesive overflow region and the area of the sealed region at the same position of a plurality of lithium-ion batteries are measured according to the foregoing method, so as to obtain a plurality of area values of the adhesive overflow region and the sealed region. The area values are averaged out to obtain an average area of the adhesive overflow region and an average area of the sealed region, and a ratio of the average area of the adhesive overflow region to the average area of the sealed region is a ratio A. FIG. 4 is a cross-sectional schematic view of the sealed region. The sealing layer is in the middle of an aluminum plastic film 3, and the sealed region 5 is on the left side. Adhesive in the sealed region 5 undergoes hot pressing of the upper and lower aluminum plastic films 3 and is extruded to the unsealed region to form an adhesive overflow region 4.

When the adhesive in the adhesive overflow region is excessive, too many bulges are formed in the adhesive overflow region, and the sealed battery is prone to break. When the adhesive in the adhesive overflow region is too scanty, the heat sealing effect is inferior, and the sealed battery is prone to break. Therefore, the value of the ratio A needs to avoid being too large or too small.

The present invention further provides an electrochemical device. The electrochemical device includes at least one partition plate according to the present invention, at least two electrode assemblies, an electrolytic solution, and an outer package, and the electrode assemblies are located in an independent hermetic chamber.

In an embodiment of the present invention, the electrochemical device includes at least one partition plate according to the present invention. The partition plate is hermetically connected to an outer package of the electrochemical device to form two independent hermetic chambers at two sides of the partition plate. Each hermetic chamber contains an electrode assembly and electrolytic solution to form an independent electrochemical cell. The partition plate is electronically conductive. Active electrode materials of different polarities may be coated at the two sides of the partition plate respectively. Internal serial connection in the electrode is implemented between adjacent electrochemical cells through the partition plate according to the present invention, so as to form a bipolar lithium-ion battery that achieves a higher working voltage.

In an embodiment of the present invention, the partition plate is electronically conductive. A tab may be led out of each of two adjacent electrode assemblies. Polarity is opposite between the tabs of the two electrode assemblies. For example, when a side that is of the partition plate and adjacent to the electrode assembly A is coated with a positive active material and a side adjacent to the electrode assembly B is coated with a negative active material, a negative tab is led out of the electrode assembly A, and a positive tab is led out of the electrode assembly B. In this case, an output voltage between the two tabs is a sum of the output voltages of the two electrochemical cells.

In an embodiment of the present invention, the partition plate is electronically insulative. Two tabs may be led out of each of two adjacent electrode assemblies. The positive tab of the electrode assembly A is serial-connected to the negative tab of the electrode assembly B. The negative tab of the electrode assembly A and the positive tab of the electrode assembly B are output tabs. The output voltage is a sum of the output voltages of the two electrochemical cells. In an embodiment of the present invention, the partition plate is electronically conductive. A tab may be led out of the partition plate to monitor the working status of the lithium-ion battery.

In an embodiment of the present invention, an outermost layer of the electrode assemblies contains a separator, and the separator is adjacent to the partition plate.

In the present invention, the outermost layer of each electrode assembly may contain at least one of a separator or a current collector depending on whether the electrode assembly comes to an end by winding or by other means. For example, the outermost layer of the electrode assembly includes just a separator, includes just a current collector, or includes a separator in one part and includes a current collector in the other part. The current collector may be in at least one of the following states: the outermost layer is not coated with an active material, the outermost layer is partially coated with an active material, or the outermost layer is fully coated with an active material.

In an embodiment of the present invention, the electrochemical device according to the present invention includes at least one partition plate. The separator may be electronically insulative or electronically conductive. The partition plate is hermetically connected to the outer package. A hermetic chamber is formed at two sides of the partition plate separately and the hermetic chambers are independent of each other. Each hermetic chamber contains an electrode assembly and electrolytic solution to form an electrochemical cell. The two sides of the partition plate are in direct contact with the separator of the adjacent electrode assembly to implement electrical insulation. In this case, two tabs are led out of each of the two electrode assemblies, and the two electrode assemblies are serial-connected to each other by the tabs.

In an embodiment of the present invention, an outermost layer of at least one of the electrode assemblies contains a separator, and the separator is adjacent to the partition plate. An outermost layer of at least one of the electrode assemblies contains a current collector, and the current collector is adjacent to the other side of the partition plate.

In an embodiment of the present invention, the electrochemical device according to the present invention includes at least one partition plate. The partition plate is hermetically connected to the outer package to form independent hermetic chambers at two sides of the partition plate. Each hermetic chamber contains an electrode assembly and electrolytic solution to form an electrochemical cell. The partition plate is electronically conductive. One side of the partition plate may be coated with an active electrode material, and the other side is in contact with the separator of the electrode assembly to implement electrical insulation. The side that is of the partition plate and close to the electrode assembly A is coated with a positive active material, and the side close to the electrode assembly B is in contact with the separator of the electrode assembly B so as to be electrically insulated from the electrode assembly B. In this case, two tabs are led out of each of the two electrode assemblies. A tab is led out of the partition plate, and the tab is parallel-connected to the positive tab of the electrode assembly A, and then serial-connected to the negative tab of the electrode assembly B.

In an embodiment of the present invention, the electrochemical device according to the present invention includes at least one partition plate. The partition plate is hermetically connected to the outer package to form independent hermetic chambers at two sides of the partition plate. Each hermetic chamber contains an electrode assembly and electrolytic solution to form an electrochemical cell. The partition plate is electronically insulative. One side of the partition plate is in contact with the separator of the electrode assembly to implement electrical insulation, and the other side of the partition plate is in direct contact with the current collector of the electrode assembly. In this case, two tabs are led out of each of the two electrode assemblies, and the two electrode assemblies are serial-connected to each other by the tabs.

In an embodiment of the present invention, the partition plate is electronically conductive. An outermost layer of the electrode assemblies contains a current collector. The current collector is adjacent to the partition plate. Current collectors of the electrode assemblies at two sides of the partition plate possess opposite polarities.

In an embodiment of the present invention, the electrochemical device according to the present invention includes at least one partition plate. The partition plate is electronically conductive. The partition plate is hermetically connected to the outer package to form independent hermetic chambers at two sides of the partition plate. Each hermetic chamber contains an electrode assembly and electrolytic solution to form an electrochemical cell. One side of the partition plate is coated with an active electrode material, and the other side is in direct contact with and electrically connected to the current collector of the electrode assembly. For example, the side that is of the partition plate and close to the electrode assembly A is coated with a positive active material, and the side close to the electrode assembly B is in direct contact with and electrically connected to the negative current collector of the electrode assembly B. In this case, a negative tab may be led out of the electrode assembly A, and a positive tab may be led out of the electrode assembly B. The two electrochemical cells are internally serial-connected to each other by the partition plate. Alternatively, two tabs are led out of the electrode assemblies A and B separately. The positive tab of the electrode assembly A is serial-connected to the negative tab of the electrode assembly B. In this case, the two electrochemical cells are internally serial-connected to each other by the partition plate and externally serial-connected by the tabs. In addition, a tab may be led out of the partition plate to monitor the working status of the battery.

In an embodiment of the present invention, the partition plate is electronically insulative. An outermost layer of the electrode assemblies contains a current collector. The current collector is adjacent to the partition plate.

In an embodiment of the present invention, the electrochemical device according to the present invention includes at least one partition plate. The partition plate is hermetically connected to the outer package. A hermetic chamber is formed at two sides of the partition plate separately and the hermetic chambers are independent of each other. Each hermetic chamber contains an electrode assembly and electrolytic solution to form an electrochemical cell. The partition plate is an electronic insulator. The two sides of the partition plate are directly connected to the outermost current collector of the adjacent electrode assembly to implement electrical insulation. In this case, two tabs are led out of each of the two electrode assemblies, and the two electrode assemblies are serial-connected to each other by the tabs.

In an embodiment of the present invention, the partition plate is electronically conductive. An undercoat layer may be sandwiched between the partition plate and the active electrode material. The undercoat layer serves to improve the performance of bonding between the partition plate and the active material, and improve the electronic conductivity between the partition plate and the active material. The undercoat layer is usually formed by coating the partition plate with a slurry and then drying the slurry, where the slurry is formed by mixing conductive carbon black, styrene butadiene rubber, and deionized water. The undercoat layers on the two sides of the partition plate may be the same or different.

The present invention further provides an electronic device. The electronic device includes any one of the foregoing electrochemical devices.

The electrode assembly used in the present invention is not particularly limited, and may be any electrode assembly in the prior art as long as the objectives of the present invention are achieved. For example, the electrode assembly is a stacked electrode assembly or a jelly-roll electrode assembly. The electrode assembly generally includes a positive electrode plate, a negative electrode plate, and a separator.

The negative electrode plate used in the present invention is not particularly limited as long as the objectives of the present invention are achieved. For example, the negative electrode plate generally includes a negative current collector and a negative active material layer. The negative current collector is not particularly limited, and may be any negative current collector known in the art, for example, a copper foil, an aluminum foil, an aluminum alloy foil, or a composite current collector. The negative active material layer includes a negative active material. The negative active material is not particularly limited, and may be any negative active material known in the art. For example, the negative active material layer may include at least one of artificial graphite, natural graphite, mesocarbon microbead, soft carbon, hard carbon, silicon, silicon carbon, lithium titanate, or the like.

The positive electrode plate used in the present invention is not particularly limited as long as the objectives of the present invention are achieved. For example, the positive electrode plate generally includes a positive current collector and a positive active material. The positive current collector is not particularly limited, and may be any positive current collector well known in the art. For example, the positive current collector may be an aluminum foil, an aluminum alloy foil, or a composite current collector. The positive active material is not particularly limited, and may be any positive active material in the prior art. The active material includes at least one of NCM811, NCM622, NCM523, NCM111, NCA, lithium iron phosphate, lithium cobaltate, lithium manganate, lithium manganese iron phosphate, or lithium titanate.

The electrolytic solution used in the present invention is not particularly limited, and may be any electrolytic well known in the art. For example, the electrolytic solution may be in a gel state, a solid state, or a liquid state. For example, the liquid-state electrolytic solution may include a lithium salt and a nonaqueous solvent.

The lithium salt is not particularly limited, and may be any lithium salt well known in the art as long as the objectives of the present invention are achieved. For example, the lithium salt includes at least one of lithium hexafluorophosphate ($LiPF_6$), lithium tetrafluoroborate ($LiBF_4$), lithium difluorophosphate ($LiPO_2F_2$), lithium bistrifluoromethanesulfonimide $LiN(CF_3SO_2)_2$ (LiTFSI), lithium bis(fluorosulfonyl)imide $Li(N(SO_2F)_2)$ (LiFSI), lithium bis(oxalate) borate $LiB(C_2O_4)_2$ (LiBOB), or lithium difluoro(oxalate)borate $LiBF_2(C_2O_4)$ (LiDFOB). For example, the lithium salt may be $LiPF_6$.

The nonaqueous solvent is not particularly limited as long as the objectives of the present invention are achieved. For example, the nonaqueous solvent may include at least one of carbonate compound, a carboxylate compound, an ether compound, a nitrile compound, or another organic solvent.

For example, the carbonate compound may include at least one of diethyl carbonate (DEC), dimethyl carbonate (DMC), ethyl methyl carbonate (EMC), dipropyl carbonate (DPC), methyl propyl carbonate (MPC), ethylene propyl carbonate (EPC), ethylene carbonate (EC), propylene carbonate (PC), butylene carbonate (BC), vinyl ethylene carbonate (VEC), fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, or trifluoromethyl ethylene carbonate.

The separator used in the present invention is not particularly limited, and may be a polymer or inorganic compound or the like formed from a material that is stable to the electrolytic solution used in the present invention. Generally, the separator is ion-conductive and electronically insulative.

For example, the separator may include a substrate layer and a surface treatment layer. The substrate layer may be fabric, film or composite film, which, in each case, is porous. The material of the substrate layer may be at least one selected from polyethylene, polypropylene, polyethylene terephthalate, or polyimide. Optionally, the substrate layer may be a polypropylene porous film, a polyethylene porous film, a polypropylene non-woven fabric, a polyethylene non-woven fabric, or a polypropylene-polyethylene-polypropylene porous composite film. Optionally, a surface treatment layer is disposed on at least one surface of the substrate layer. The surface treatment layer may be a polymer layer or an inorganic compound layer, or a layer formed by mixing a polymer and an inorganic compound.

For example, the inorganic compound layer includes inorganic particles and a binder. The inorganic particles are not particularly limited, and may be at least one selected from: aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, and barium sulfate. The binder is not particularly limited, and may be one or more selected from polyvinylidene fluoride, vinylidene fluoride-hexafluoropropylene copolymer, polyamide, polyacrylonitrile, polyacrylate, polyacrylic acid, polyacrylic acid sodium salt, polyvinylpyrrolidone, polyvinyl ether, poly methyl methacrylate, polytetrafluoroethylene, or polyhexafluoropropylene. The polymer layer includes a polymer, and the material of the polymer includes at least one of polyamide, polyacrylonitrile, acrylate polymer, polyacrylic acid, polyacrylate, polyvinylpyrrolidone, polyvinyl ether, polyvinylidene fluoride, or poly(vinylidene fluoride-hexafluoropropylene).

The present invention further provides a method for preparing a partition plate. The method may be used to prepare a partition plate in which an intermediate layer is fully coated with a sealing layer. The method includes the following steps:

(1) Dispersing a material of a sealing layer into a dispersant evenly to prepare a sealing layer suspension;
(2) Tape-casting the obtained suspension to two sides of the intermediate layer by using a tape-cast device, so as to prepare a sealing layer; and
(3) Drying the dispersant in the sealing layer suspension to complete preparing the partition plate.

The present invention further provides a method for preparing a partition plate. The method may be used to prepare a partition plate in which an intermediate layer is fully coated with a sealing layer. The method includes the following steps:

(1) Dispersing a material of a sealing layer into a dispersant evenly to prepare a sealing layer suspension;
(2) Dispersing the material of the intermediate layer into a dispersant evenly to prepare an intermediate layer suspension;
(3) Tape-casting the intermediate layer suspension and the sealing layer suspension synchronously by using a tape-cast device, so as to prepare the intermediate layer and the sealing layers that are located at two sides of the intermediate layer;
(4) Drying the dispersant in the sealing layer suspension and the intermediate layer suspension to complete preparing the partition plate.

The present invention further provides a method for preparing a partition plate. The method may be used to prepare a partition plate in which an intermediate layer is peripherally coated with a sealing layer. The method includes the following steps:

(1) Dispersing a material of a sealing layer into a dispersant evenly to prepare a sealing layer suspension;
(2) Preparing a sealing layer at two sides of the intermediate layer separately by using an adhesive applicator; and
(3) Drying the dispersant in the sealing layer suspension to complete preparing the partition plate.

The present invention further provides a method for preparing a partition plate. The method may be used to prepare a partition plate in which an intermediate layer is peripherally coated with a sealing layer. The method includes the following steps:

(1) Dispersing a material of a sealing layer into a dispersant evenly to prepare a sealing layer suspension;
(2) Preparing a sealing layer at two sides of the intermediate layer separately by using an 3D printer; and
(3) Drying the dispersant in the sealing layer suspension to complete preparing the partition plate.

The dispersant used in the present invention is not particularly limited, and may be a polar organic solvent commonly used in this field. For example, the dispersant may be NMP (N-methyl-pyrrolidone), DMF (N,N-dimethylformamide), or THF (tetrahydrofuran).

The implementations of the present invention are described below in more detail with reference to embodiments and comparative embodiments. Various tests and evaluations are performed according to the following methods. Unless otherwise specified, "fraction" and "%" are weight-based.

**Embodiments**

**Preparation Example 1: Preparing a negative electrode plate**

Mixing graphite as a negative active material, conductive carbon black, and the styrene butadiene rubber at a mass ratio of 96: 1.5: 2.5, adding deionized water as a solvent, blending the mixture into a slurry with a solid content of 70%, and stirring the slurry evenly. Coating one surface of a 10 $\mu$m-thick copper foil with the slurry evenly, and drying the slurry at a temperature of 110 °C to obtain a negative electrode plate of which a single side is coated with a 150 $\mu$m-thick negative active material layer, and then repeating the foregoing coating steps on the other surface of the negative electrode plate. Cutting the electrode plate into a size of 41 mm $\times$ 61 mm after completion of the coating, welding tabs, and leaving the electrode plate ready for use.

**Preparation Example 2: Preparing a positive electrode plate**

Mixing $LiCoO_2$ is as a positive active material, conductive carbon black, and polyvinylidene difluoride (PVDF) at a mass ratio of 97.5: 1.0: 1.5, adding NMP as a solvent, blending the mixture into a slurry with a solid content of 75%, and stirring the slurry evenly. Coating one surface of a 12 $\mu$m-thick aluminum foil with the slurry evenly, and drying the slurry at a temperature of 90 °C to obtain a positive electrode plate of which a single side is coated with a 100 $\mu$m-thick positive active material layer. Then repeating the foregoing steps on the other surface of the positive electrode plate. Cutting the electrode plate into a size of 38 mm $\times$ 58 mm after completion of the coating, welding tabs, and leaving the electrode plate ready for use.

**Preparation Example 3: Preparing an electrolytic solution**

Mixing ethylene carbonate (EC), ethyl methyl carbonate (EMC), and diethyl carbonate (DEC) as an organic solvent at a mass ratio of EC: EMC: DEC = 30: 50: 20 in a dry argon atmosphere first, and then adding lithium hexafluorophosphate ($LiPF_6$) into the organic solvent for dissolving, and mixing the organic solvent evenly to obtain an electrolytic solution in which a lithium salt concentration is 1.15 M.

**Preparation Example 4: Preparing an electrode assembly**

Using a 15 $\mu$m-thick polyethylene (PE) film as a separator, and placing a positive electrode plate of Preparation Example 2 on two sides of the negative electrode plate of Preparation Example 1 separately, placing a separator between the positive electrode plate and the negative electrode plate to form a stacked plate, and then fixing four corners of the entire stacked plate structure, and leading out a positive tab and a negative tab to obtain an electrode assembly A.
Using a 15 $\mu$m-thick PE film as a separator, and placing a negative electrode plate on two sides of the positive electrode plate separately, placing a separator between the positive electrode plate and the negative electrode plate to form a stacked plate, and then fixing four corners of the entire stacked plate structure, and leading out a positive tab and a negative tab to obtain an electrode assembly B.

**Embodiment 1**

Preparing a partition plate

(1) Dispersing a sealing material PP in the sealing layer into a dispersant N-methylpyrrolidone (NMP) evenly to obtain a sealing layer suspension with a concentration of 45 wt%.
(2) Preparing a 40 $\mu$m-thick sealing layer at peripheral edges of two surfaces of a 20 $\mu$m-thick intermediate layer polyethylene terephthalate (PET) film, where the width of the sealing layer PP is 5 mm, and the temperature at which the intermediate layer PET starts to soften is 270 °C, the temperature at which the sealing layer PP starts to soften is 150 °C, and a thickness compression rate of the sealing layer is 70%.
(3) Drying the dispersant NMP in the sealing layer suspension at a temperature of 130 °C to complete preparing the partition plate.

The thickness compression rate of the sealing layer in each embodiment is adjusted by adjusting parameters such as sealing duration, sealing pressure, and sealing temperature. For details, see Table 1A and Table IB.

Assembling an electrode assembly

Placing a 90 $\mu$m-thick punch-molded packaging film (aluminum plastic film) into an assembly jig, with a pit side facing upward, then placing the electrode assembly A of Preparation Example 4 into a pit, placing the partition plate onto the electrode assembly A, leaving one side of the partition plate to contact the separator of the electrode assembly A, and pressing the partition plate tightly by exerting an external force.
Placing the foregoing assembled semi-finished product into another assembly jig, placing the electrode assembly B of Preparation Example 4 onto the partition plate, leaving the other side of the partition plate to contact the separator of the electrode assembly B, then overlaying the electrode assembly B with another 90 μm-thick punch-molded aluminum plastic film, with a pit side facing downward, and then thermally sealing the two aluminum plastic films and the partition plate together by hot pressing, so that the electrode assembly A is separated from the electrode assembly B by the partition plate to obtain an assembled electrode assembly. The assembled electrode assembly contains two independent cavities. The electrode assembly A corresponds to a first cavity, and the electrode assembly B corresponds to a second cavity.

Injecting electrolytic solution and sealing the electrode assembly

Injecting the electrolytic solution of Preparation Example 3 into the two cavities of the assembled electrode assembly and then sealing the electrode assembly. Leading the tabs of both electrode assemblies out of the outer package, and welding the positive tab of the electrode assembly A and the negative tab of the electrode assembly B together to implement serial connection and conduction between the two electrode assemblies.

**Embodiment 2**

This embodiment is the same as Embodiment 1 except that the thickness compression rate of the sealing layer is 40% during preparation of the partition plate.

**Embodiment 3**

This embodiment is the same as Embodiment 1 except that the thickness compression rate of the sealing layer is 20% during preparation of the partition plate.

**Embodiment 4**

This embodiment is the same as Embodiment 1 except that during preparation of the partition plate, the material of the sealing layer is PP, the material of the intermediate layer is PP, the temperature at which the sealing layer starts to soften is 130 °C, the temperature at which the intermediate layer starts to soften is 150 °C, and the thickness compression rate of the sealing layer is 40%.

**Embodiment 5**

This embodiment is the same as Embodiment 1 except that during preparation of the partition plate, the material of the intermediate layer is polyimide (PI), the temperature at which the intermediate layer starts to soften is 334 °C, and the thickness compression rate of the sealing layer is 40%.

**Embodiment 6**

This embodiment is the same as Embodiment 1 except that during preparation of the partition plate, the material of the sealing layer is polystyrene (PS), the material of the intermediate layer is stainless steel, the temperature at which the sealing layer starts to soften is 240 °C, the temperature at which the intermediate layer starts to soften is 1440 °C, and the thickness compression rate of the sealing layer is 40%.

**Embodiment 7**

This embodiment is the same as Embodiment 1 except that during preparation of the partition plate, the material of the intermediate layer is PI, the temperature at which the intermediate layer starts to soften is 334 °C, the thickness compression rate of the sealing layer is 40%, the interfacial bonding force between the sealing layer and the intermediate layer is 28 N/m, and the interfacial bonding force between the sealing layer and the outer package is 17.3 N/m.

**Embodiment 8**

This embodiment is the same as Embodiment 1 except that during preparation of the partition plate, the material of the sealing layer is PS, the material of the intermediate layer is PI, the temperature at which the sealing layer starts to soften is 240 °C, the temperature at which the material of the intermediate layer starts to soften is 334 °C, and the thickness compression rate of the sealing layer is 40%.

**Embodiment 9**

This embodiment is the same as Embodiment 1 except that during preparation of the partition plate, the material of the intermediate layer is PI, the temperature at which the material of the intermediate layer starts to soften is 334 °C, and the ratio A is 0.

**Embodiment 10**

This embodiment is the same as Embodiment 1 except that during preparation of the partition plate, the material of the intermediate layer is PI, the temperature at which the material of the intermediate layer starts to soften is 334 °C, and the ratio A is 0.1.

**Embodiment 11**

This embodiment is the same as Embodiment 1 except that during preparation of the partition plate, the material of the intermediate layer is PI, the temperature at which the material of the intermediate layer starts to soften is 334 °C, the thickness compression rate of the sealing layer is 40%, and the ratio A is 1.5.

**Embodiment 12**

This embodiment is the same as Embodiment 1 except that during preparation of the partition plate, the material of the intermediate layer is PI, the temperature at which the material of the intermediate layer starts to soften is 334 °C, the thickness compression rate of the sealing layer is 20%, and the ratio A is 20.
In Embodiments 9 to 12, the ratio A is adjusted by adjusting an adhesive applying width in the sealed adhesive region. The smaller the adhesive applying width, the lower the ratio A.

**Embodiment 13**

This embodiment is the same as Embodiment 1 except that during preparation of the partition plate, the material of the intermediate layer is Al, the temperature at which the material of the sealing layer starts to soften is 130 °C, the temperature at which the material of the intermediate layer starts to soften is 660 °C, and the thickness compression rate of the sealing layer is 40%.

**Embodiment 14**

This embodiment is the same as Embodiment 1 except that during preparation of the partition plate, the material of the intermediate layer is carbon film, the temperature at which the intermediate layer starts to soften is 3500 °C, and the thickness compression rate of the sealing layer is 40%.

**Embodiment 15**

This embodiment is the same as Embodiment 1 except that during preparation of the partition plate, the material of the intermediate layer is PI, the temperature at which the material of the intermediate layer starts to soften is 334 °C, the thickness compression rate of the sealing layer is 40%, and the thickness of the intermediate layer is 1000 $\mu$m.

**Embodiment 16**

This embodiment is the same as Embodiment 1 except that during preparation of the partition plate, the material of the intermediate layer is PI, the temperature at which the material of the intermediate layer starts to soften is 334 °C, the thickness compression rate of the sealing layer is 40%, and the thickness of the intermediate layer is 10 $\mu$m.

**Embodiment 17**

This embodiment is the same as Embodiment 1 except that during preparation of the partition plate, the material of the material of the intermediate layer is PI, the temperature at which the material of the intermediate layer starts to soften is 334 °C, the thickness compression rate of the sealing layer is 40%, and the thickness of the intermediate layer is 2 $\mu$m.

**Embodiment 18**

Differences are that during preparation of the partition plate, the material of the intermediate layer is PI, the temperature at which the material of the intermediate layer starts to soften is 334 °C, and the thickness compression rate of the sealing layer is 40%.

Assembling an electrode assembly:

Placing a 90 $\mu$m-thick punch-molded packaging film (aluminum plastic film) into an assembly jig, with a pit side facing upward, then placing the electrode assembly A of Preparation Example 4 into a pit, placing the partition plate onto the electrode assembly A, leaving one side of the partition plate to contact the separator of the electrode assembly A, and pressing the partition plate tightly by exerting an external force.

Placing the foregoing assembled semi-finished product into another assembly jig, placing the electrode assembly B of Preparation Example 4 onto the partition plate, leaving the other side of the partition plate to contact the current collector of the electrode assembly B, then overlaying the electrode assembly B with another 90 $\mu$m-thick punch-molded aluminum plastic film, with a pit side facing downward, and then thermally sealing the two aluminum plastic films and the partition plate together by hot pressing, so that the electrode assembly A is separated from the electrode assembly B by the partition plate to obtain an assembled electrode assembly. The assembled electrode assembly contains two independent cavities. The electrode assembly A corresponds to a first cavity, and the electrode assembly B corresponds to a second cavity.

The rest is the same as Embodiment 1.

**Embodiment 19**

Differences are that during preparation of the partition plate, the material of the intermediate layer is stainless steel, the melting point of the intermediate layer is 1440 °C, and the thickness compression rate of the sealing layer is 40%.

Assembling an electrode assembly:

Placing a 90 $\mu$m-thick punch-molded packaging film (aluminum plastic film) into an assembly jig, with a pit side facing upward, then placing the electrode assembly A of Preparation Example 4 into a pit, leaving the positive electrode plate of the electrode assembly A to face upward, placing the partition plate onto the electrode assembly A, leaving one side of the partition plate to contact the positive current collector of the electrode assembly A, and pressing the partition plate tightly by exerting an external force.

Placing the foregoing assembled semi-finished product into an assembly jig, leaving the partition plate to face upward, placing the electrode assembly B of Preparation Example 4 onto the partition plate with the negative electrode facing downward, leaving the other side of the partition plate to contact the negative current collector of the electrode assembly B, then overlaying the electrode assembly B with another 90 $\mu$m-thick punch-molded aluminum plastic film, with a pit side facing downward, and then thermally sealing the two aluminum plastic films and the partition plate together by hot pressing, so that the electrode assembly A is separated from the electrode assembly B by the partition plate to obtain an assembled electrode assembly. The assembled electrode assembly contains two independent cavities. The electrode assembly A corresponds to a first cavity, and the electrode assembly B corresponds to a second cavity.

Injecting electrolytic solution and sealing the electrode assembly:
Injecting the electrolytic solution of Preparation Example 3 into the two cavities of the assembled electrode assembly and then sealing the electrode assembly. Leading the tabs of both the electrode assembly A and the electrode assembly B out of the outer package, and implementing internal serial connection between the two electrochemical cells through the partition plate to obtain a lithium-ion battery.

The rest is the same as Embodiment 1.

**Embodiment 20**

Differences are that during preparation of the partition plate, the material of the intermediate layer is PI, the temperature at which the material of the intermediate layer starts to soften is 334 °C, and the thickness compression rate of the sealing layer is 40%.

Assembling an electrode assembly:

Placing a 90 $\mu$m-thick punch-molded packaging film (aluminum plastic film) into an assembly jig, with a pit side facing upward, then placing the electrode assembly A of Preparation Example 4 into a pit, placing the partition plate onto the electrode assembly A, leaving one side of the partition plate to contact the current collector of the electrode assembly A, and pressing the partition plate tightly by exerting an external force.

Placing the foregoing assembled semi-finished product into another assembly jig, placing the electrode assembly B of Preparation Example 4 onto the partition plate, leaving the other side of the partition plate to contact the current collector of the electrode assembly B, then overlaying the electrode assembly B with another 90 $\mu$m-thick punch-molded aluminum plastic film, with a pit side facing downward, and then thermally sealing the two aluminum plastic films and the partition plate together by hot pressing, so that the electrode assembly A is separated from the electrode assembly B by the partition plate to obtain an assembled electrode assembly. The assembled electrode assembly contains two independent cavities. The electrode assembly A corresponds to a first cavity, and the electrode assembly B corresponds to a second cavity.

The rest is the same as Embodiment 1.

**Embodiment 21**

Differences are that during preparation of the partition plate, the material of the intermediate layer is PI, the temperature at which the material of the intermediate layer starts to soften is 334 °C, the thickness compression rate of the sealing layer is 40%, and both sides of the sealing layer are coated with PP.

Steps of preparing a partition plate:

(1) Dispersing a sealing material PP in the sealing layer into a dispersant N-methylpyrrolidone (NMP) evenly to obtain a sealing layer suspension with a concentration of 45 wt%.
(2) Making a 30 $\mu$m-thick sealing layer PP on two sides of a 20 $\mu$m-thick intermediate layer polyimide (PI) film evenly by using an adhesive applicator, where the temperature at which the intermediate layer PI starts to soften is 334 °C and the temperature at which the sealing layer PP starts to soften is 150 °C.
(3) Drying the dispersant NMP in the sealing layer suspension at a temperature of 130 °C to complete preparing the partition plate.

The rest is the same as Embodiment 1.

**Embodiment 22**

Differences are that during preparation of the partition plate, the material of the intermediate layer is PI, the temperature at which the material of the intermediate layer starts to soften is 334 °C, the thickness compression rate of the sealing layer is 40%, and both sides of the sealing layer are coated with PP.

Steps of preparing a partition plate:

(1) Dispersing a sealing material PP in the sealing layer into a dispersant N-methylpyrrolidone (NMP) evenly to obtain a sealing layer suspension with a concentration of 45 wt%.
(2) Making a 30 $\mu$m-thick sealing layer PP on two sides of a 20 $\mu$m-thick intermediate layer polyimide (PI) film evenly by using an adhesive applicator, where the temperature at which the intermediate layer PI starts to soften is 334 °C and the temperature at which the sealing layer PP starts to soften is 150 °C.
(3) Drying the dispersant NMP in the sealing layer suspension at a temperature of 130 °C to complete preparing the partition plate.

Assembling an electrode assembly:

Placing a 90 $\mu$m-thick punch-molded packaging film (aluminum plastic film) into an assembly jig, with a pit side facing upward, then placing the electrode assembly A of Preparation Example 4 into a pit, placing the partition plate onto the electrode assembly A, leaving one side of the partition plate to contact the separator of the electrode assembly A, and pressing the partition plate tightly by exerting an external force.

Placing the foregoing assembled semi-finished product into another assembly jig, placing the electrode assembly B of Preparation Example 4 onto the partition plate, leaving the other side of the partition plate to contact the current collector of the electrode assembly B, then overlaying the electrode assembly B with another 90 $\mu$m-thick punch-molded aluminum plastic film, with a pit side facing downward, and then thermally sealing the two aluminum plastic films and the partition plate together by hot pressing, so that the electrode assembly A is separated from the electrode assembly B by the partition plate to obtain an assembled electrode assembly. The assembled electrode assembly contains two independent cavities. The electrode assembly A corresponds to a first cavity, and the electrode assembly B corresponds to a second cavity.

The rest is the same as Embodiment 1.

**Embodiment 23**

Differences are that during preparation of the partition plate, the material of the intermediate layer is PI, the temperature at which the material of the intermediate layer starts to soften is 334 °C, the thickness compression rate of the sealing layer is 40%, and both sides of the sealing layer are coated with PP.

Steps of preparing a partition plate:

(1) Dispersing a sealing material PP in the sealing layer into a dispersant N-methylpyrrolidone (NMP) evenly to obtain a sealing layer suspension with a concentration of 45 wt%.
(2) Making a 30 $\mu$m-thick sealing layer PP on two sides of a 20 $\mu$m-thick intermediate layer polyimide (PI) film evenly by using an adhesive applicator, where the temperature at which the intermediate layer PI starts to soften is 334 °C and the temperature at which the sealing layer PP starts to soften is 150 °C.
(3) Drying the dispersant NMP in the sealing layer suspension at a temperature of 130 °C to complete preparing the partition plate.

Assembling an electrode assembly:

Placing a 90 $\mu$m-thick punch-molded packaging film (aluminum plastic film) into an assembly jig, with a pit side facing upward, then placing the electrode assembly A of Preparation Example 4 into a pit, placing the partition plate onto the electrode assembly A, leaving one side of the partition plate to contact the current collector of the electrode assembly A, and pressing the partition plate tightly by exerting an external force.

Placing the foregoing assembled semi-finished product into another assembly jig, placing the electrode assembly B of Preparation Example 4 onto the partition plate, then overlaying the electrode assembly B with another 90 $\mu$m-thick punch-molded aluminum plastic film, with a pit side facing downward, leaving the other side of the partition plate to contact the current collector of the electrode assembly B, and then thermally sealing the two aluminum plastic films and the partition plate together by hot pressing, so that the electrode assembly A is separated from the electrode assembly B by the partition plate to obtain an assembled electrode assembly. The assembled electrode assembly contains two independent cavities. The electrode assembly A corresponds to a first cavity, and the electrode assembly B corresponds to a second cavity.

The rest is the same as Embodiment 1.

**Embodiment 24**

Differences are that during preparation of the partition plate, the material of the intermediate layer is stainless steel, the melting point of the intermediate layer is 1440 °C, and the thickness compression rate of the sealing layer is 40%.

Assembling an electrode assembly:

Placing a 90 $\mu$m-thick punch-molded packaging film (aluminum plastic film) into an assembly jig, with a pit side facing upward, then placing the electrode assembly A of Preparation Example 4 into a pit, placing the partition plate onto the electrode assembly A, leaving one side of the partition plate to contact the separator of the electrode assembly A, and pressing the partition plate tightly by exerting an external force.

Placing the foregoing assembled semi-finished product into another assembly jig, placing the electrode assembly B of Preparation Example 4 onto the partition plate, leaving the other side of the partition plate to contact the positive current collector of the electrode assembly B, then overlaying the electrode assembly B with another 90 $\mu$m-thick punch-molded aluminum plastic film, with a pit side facing downward, and then thermally sealing the two aluminum plastic films and the partition plate together by hot pressing, so that the electrode assembly A is separated from the electrode assembly B by the partition plate to obtain an assembled electrode assembly. The assembled electrode assembly contains two independent cavities. The electrode assembly A corresponds to a first cavity, and the electrode assembly B corresponds to a second cavity.

Injecting electrolytic solution and sealing the electrode assembly:

Injecting the electrolytic solution of Preparation Example 3 into the two cavities of the assembled electrode assembly and then sealing the electrode assembly. Leading the tabs of both electrode assemblies out of the outer package, and welding the positive tab of the electrode assembly A and the negative tab of the electrode assembly B together to implement serial connection and conduction between the two electrode assemblies. This tab of the partition plate is parallel-connected to the positive tab of the electrode assembly A, and then serial-connected to the negative tab of the electrode assembly B to obtain a lithium-ion battery.

The rest is the same as Embodiment 1.

**Embodiment 25**

Differences are that during preparation of the partition plate, the thickness compression rate of the sealing layer is 40%.

Preparing an electrode assembly:

Stacking the double-side-coated negative electrode plate, the first separator, the double-side-coated positive electrode plate, and the second separator sequentially to form a stacked plate, winding the entire stacked plate, leading out the positive tab and the negative tab, and leaving the first separator outermost. The separator is a 15 $\mu$m-thick polyethylene (PE) film, the negative electrode plate is prepared according to Preparation Example 1, and the positive electrode plate is prepared according to Preparation Example 2. Electrode assembly A is made.

Stacking the double-side-coated negative electrode plate, the first separator, the double-side-coated positive electrode plate, and the second separator sequentially to form a stacked plate, winding the entire stacked plate, leading out the positive tab and the negative tab, and leaving the second separator outermost. The negative electrode plate is prepared according to Preparation Example 1, and the positive electrode plate is prepared according to Preparation Example 2. The separator is a 15 $\mu$m-thick polyethylene (PE) film. Electrode assembly B is made.

The rest is the same as Embodiment 1.

**Embodiment 26**

Differences are that during preparation of the partition plate, the material of the intermediate layer is stainless steel, the melting point of the intermediate layer is 1440 °C, and the thickness compression rate of the sealing layer is 40%.

Preparing an electrode assembly:

Stacking the double-side-coated negative electrode plate, the first separator, the double-side-coated positive electrode plate, and the second separator sequentially to form a stacked plate, winding the entire stacked plate, leading out the positive tab and the negative tab, and leaving the first separator outermost. The separator is a 15 $\mu$m-thick polyethylene (PE) film, the negative electrode plate is prepared according to Preparation Example 1, and the positive electrode plate is prepared according to Preparation Example 2. Electrode assembly A is made.

Stacking the double-side-coated negative electrode plate, the first separator, the double-side-coated positive electrode plate, and the second separator sequentially to form a stacked plate, winding the entire stacked plate, leading out the positive tab and the negative tab, and leaving the positive current collector of the positive electrode plate outermost. The separator is a 15 $\mu$m-thick polyethylene (PE) film, the negative electrode plate is prepared according to Preparation Example 1, and the positive electrode plate is prepared according to Preparation Example 2. Electrode assembly B is made.

Assembling an electrode assembly:

Placing a 90 $\mu$m-thick punch-molded packaging film (aluminum plastic film) into an assembly jig, with a pit side facing upward, then placing the electrode assembly A into a pit, placing the partition plate onto the electrode assembly A, leaving one side of the partition plate to contact the first separator of the electrode assembly A, and pressing the partition plate tightly by exerting an external force.

Placing the foregoing assembled semi-finished product into another assembly jig, placing the electrode assembly B onto the partition plate, leaving the other side of the partition plate to contact the positive current collector of the electrode assembly B, then overlaying the electrode assembly B with another 90 $\mu$m-thick punch-molded aluminum plastic film, with a pit side facing downward, and then thermally sealing the two aluminum plastic films and the partition plate together by hot pressing, so that the electrode assembly A is separated from the electrode assembly B by the partition plate to obtain an assembled electrode assembly. The assembled electrode assembly contains two independent cavities. The electrode assembly A corresponds to a first cavity, and the electrode assembly B corresponds to a second cavity.

Injecting electrolytic solution and sealing the electrode assembly:

Injecting the electrolytic solution of Preparation Example 3 into the two cavities of the assembled electrode assembly and then sealing the electrode assembly. Leading the tabs of both electrode assemblies out of the outer package, and welding the positive tab of the electrode assembly A and the negative tab of the electrode assembly B together to implement serial connection and conduction between the two electrode assemblies.

The rest is the same as Embodiment 1.

**Embodiment 27**

Differences are that during preparation of the partition plate, the material of the intermediate layer is stainless steel, the melting point of the intermediate layer is 1440 °C, and the thickness compression rate of the sealing layer is 40%.

Preparing an electrode assembly:

Stacking the double-side-coated negative electrode plate, the separator, and the double-side-coated positive electrode plate sequentially to form a stacked plate, winding the entire stacked plate, leading out the positive tab and the negative tab, and leaving the negative current collector of the negative electrode plate outermost. The separator is a 15 $\mu$m-thick polyethylene (PE) film, the negative electrode plate is prepared according to Preparation Example 1, and the positive electrode plate is prepared according to Preparation Example 2. Electrode assembly A is made.

Stacking the double-side-coated negative electrode plate, the separator, and the double-side-coated positive electrode plate sequentially to form a stacked plate, winding the entire stacked plate, leading out the positive tab and the negative tab, and leaving the positive current collector of the positive electrode plate outermost. The separator is a 15 $\mu$m-thick polyethylene (PE) film, the negative electrode plate is prepared according to Preparation Example 1, and the positive electrode plate is prepared according to Preparation Example 2. Electrode assembly B is made.

Assembling an electrode assembly:

Placing a 90 $\mu$m-thick punch-molded packaging film (aluminum plastic film) into an assembly jig, with a pit side facing upward, then placing the electrode assembly A into a pit, leaving the positive electrode plate of the electrode assembly A to face upward, placing the partition plate onto the electrode assembly A, leaving one side of the partition plate to contact the negative current collector of the electrode assembly A, and pressing the partition plate tightly by exerting an external force.

Placing the foregoing assembled semi-finished product into another assembly jig with the partition plate facing upward, placing the electrode assembly B onto the partition plate with the negative electrode facing downward, leaving the other side of the partition plate to contact the positive current collector of the electrode assembly B, then overlaying the electrode assembly B with another 90 $\mu$m-thick punch-molded aluminum plastic film, with a pit side facing downward, and then thermally sealing the two aluminum plastic films and the partition plate together by hot pressing, so that the electrode assembly A is separated from the electrode assembly B by the partition plate to obtain an assembled electrode assembly. The assembled electrode assembly contains two independent cavities. The electrode assembly A corresponds to a first cavity, and the electrode assembly B corresponds to a second cavity.

Injecting electrolytic solution and sealing the electrode assembly:

Injecting the electrolytic solution of Preparation Example 3 into the two cavities of the assembled electrode assembly and then sealing the electrode assembly. Leading the tabs of both the electrode assembly A and the electrode assembly B out of the outer package, and implementing internal serial connection between the two electrochemical cells through the partition plate to obtain a lithium-ion battery.

The rest is the same as Embodiment 1.

**Comparative Embodiment 1**

Single-electrode lithium-ion battery

Stacking the positive electrode plate of Preparation Example 2 and the negative electrode plate of Preparation Example 1 together, placing a 15 $\mu$m-thick PE separator between the positive electrode plate and the negative electrode plate, packaging the stacked plate with an aluminum foil, injecting the electrolytic solution of Preparation Example 3, and leading the tabs of the positive and negative electrode plates out of the outer package. A lithium-ion battery is obtained.

**Comparative Embodiment 2**

Two independent electrode assemblies are serial-connected externally, as shown in FIG. 5.

Injecting electrolytic solution and sealing the electrode assembly:

Fixing four corners of the electrode assembly A and four corners of the electrode assembly B of Preparation Example 4 separately, packaging the electrode assemblies with an aluminum plastic film, then sealing the package peripherally, injecting the electrolytic solution of Preparation Example 3 into the aluminum plastic film, and leading all tabs of the electrode assemblies A and B out of the aluminum plastic film. Welding the positive tab of the electrode assembly A and the negative tab of the electrode assembly B together by means of laser welding to implement serial connection and conduction between the electrode assembly A and the electrode assembly B, so that the assembling of the battery is completed.

## Comparative Embodiment 3

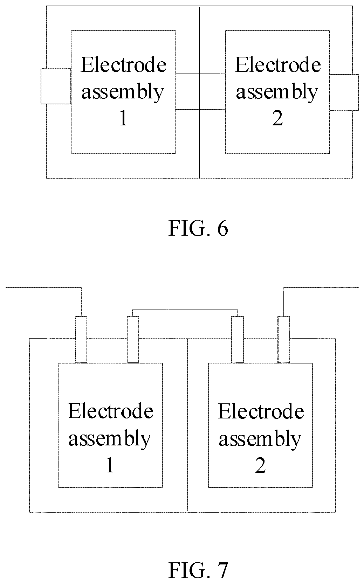

Serial-connecting two independent electrode assemblies in tandem, as shown in FIG. 6.

Assembling the electrode assembly, injecting electrolytic solution, and sealing:

Applying a sealant onto the positive tab of the electrode assembly of Preparation Example 4, welding the negative tab of the electrode assembly A and the positive tab of the electrode assembly B to implement serial connection of the electrodes of the electrode assembly A and the electrode assembly B, and sealing the serial-connected electrode assemblies into a molded aluminum plastic film. In a sealing process, sealing the outer contour at a top side, performing sealing between electrode assemblies along the sealant of the positive electrode in a width direction of each electrode assembly so that the cavity of one electrode assembly is isolated from the cavity of another, and injecting the electrolytic solution of Preparation Example 3 into the cavities in which the two electrode assemblies are located. After sealing, leading a positive tab out of one side of the electrode assembly in a length direction of the electrode assembly, leading a negative tab out of the other side, and leaving the remaining serial-connected tabs to be in the outer package of the electrode assembly.

## Comparative Embodiment 4

Serial-connecting two independent electrode assemblies alongside, as shown in FIG. 7.

Assembling an electrode assembly:

Placing the electrode assembly A of Preparation Example 4 into a molded aluminum plastic film at one side of the aluminum plastic film, overlaying the aluminum plastic film with an upper aluminum plastic film, and pressing tightly the side at which the electrode assembly A is located; applying adhesive at a boundary of the aluminum plastic film in which the electrode assembly A has been placed, pressing the upper and lower aluminum plastic films tightly, applying the adhesive from the end of the electrode assembly to a top sealed region along a length direction of the electrode assembly, and solidifying into shape.

Placing the electrode assembly B of Preparation Example 4 into a lateral vacant region of the electrode assembly A in the foregoing semi-finished product, and performing top sealing of the entire aluminum plastic film. The top sealed region intersects the adhesive applying region perpendicularly, and are in contact hermetically, so that the electrode assemblies A and B are located in independent hermetic cavities separately.

Injecting electrolytic solution and sealing the electrode assembly

Injecting the electrolytic solution of Preparation Example 3 into the cavities in which the two electrode assemblies are located, and sealing the aluminum plastic film. Leading the tabs of both electrode assemblies out of the outer package, and welding the positive tab of the electrode assembly A to the negative tab of the electrode assembly B. Ensuring that the two electrode assemblies are located in two independent hermetic cavities, and making the electrolytic solution unexchangeable between the two cavities.

## Comparative Embodiment 5

Stacking along the thickness direction with a single packaging bag without a partition plate

Assembling an electrode assembly:

Placing a 90 $\mu$m-thick punch-molded packaging film (an aluminum plastic film) into an assembly jig, with a pit side facing upward. Placing the electrode assembly A of Preparation Example 4 into a pit, placing the electrode assembly B of Preparation Example 4 onto the electrode assembly A, separating the electrode assembly A from the electrode assembly B by using a separator, and pressing tightly. Then overlaying the electrode assembly B with another packaging film, with the pit side facing downward, and thermally sealing the periphery.

Injecting electrolytic solution and sealing the electrode assembly:

Injecting the electrolytic solution of Preparation Example 3 into the cavities in which the two electrode assemblies are located, and then sealing the periphery. Leading the positive and negative tabs of the electrode assembly out of the outer package, and staggering the tabs to avoid sealing failure caused by stacking of the tabs in the thickness direction.

Welding the positive tab of the electrode assembly A and the negative tab of the electrode assembly B together to implement serial connection and conduction between the two electrode assemblies.

**Comparative Embodiment 6**

Atypical single-layer PP separator is directly used as a partition plate. The thickness of the partition plate is 20 $\mu$m, and the temperature at which the partition plate starts to soften is 165 °C.

Assembling an electrode assembly:

Placing a 90 $\mu$m-thick punch-molded packaging film (aluminum plastic film) into an assembly jig, with a pit side facing upward, then placing the electrode assembly A of Preparation Example 4 into a pit, placing the PP separator onto the electrode assembly A, and pressing tightly by exerting an external force.

Placing the foregoing assembled semi-finished product into another assembly jig, placing the electrode assembly B of Preparation Example 4 onto the PP separator, then overlaying the electrode assembly B with another 90 $\mu$m-thick punch-molded aluminum plastic film, with a pit side facing downward, and then thermally sealing the two aluminum plastic films and the PP separator together by hot pressing, so that the electrode assembly A is separated from the electrode assembly B by the PP separator to obtain an assembled electrode assembly. The assembled electrode assembly contains two independent cavities. The electrode assembly A corresponds to a first cavity, and the electrode assembly B corresponds to a second cavity.

Injecting electrolytic solution and sealing the electrode assembly

Injecting the electrolytic solution of Preparation Example 3 into the cavities in which the two electrode assemblies are located, and then sealing the periphery. Leading the positive and negative tabs of the electrode assemblies out of the outer package, and welding the positive tab of the electrode assembly A and the negative tab of the electrode assembly B together to implement serial connection and conduction between the two electrode assemblies.

**Comparative Embodiment 7**

This comparative embodiment is the same as Embodiment 6 except that single-layer PP is used as a partition plate, the thickness of the partition plate is 20 $\mu$m, and the temperature at which the partition plate starts to soften is 165 °C.

**Comparative Embodiment 8**

This comparative embodiment is the same as Embodiment 6 except that single-layer PI is used as a partition plate, the thickness of the partition plate is 20 $\mu$m, and the temperature at which the partition plate starts to soften is 334 °C.

**Comparative Embodiment 9**

This comparative embodiment is the same as Embodiment 6 except that single-layer stainless steel is used as a partition plate, the thickness of the partition plate is 20 $\mu$m, and the melting point is 1440 °C.

**Performance test**

The partition plate for use in an electrochemical device and a bipolar lithium-ion battery, which are made in each embodiment and each comparative embodiment, are tested by using the following methods:

Testing the interfacial bonding force F1 between the sealing layer and the intermediate layer

1) Removing a sealed region portion from the electrode assembly, and using the portion as sample 1.
2) Cooling the sample 1 in liquid nitrogen, and grinding off the outer package at one side of the sealing layer to expose the interface between the sealing layer and the intermediate layer.
3) Cutting the sample 1 into a test strip 8 mm wide and 6 cm long to obtain a sample 2 so that in the region of the test strip, the sealing layer fully overlays the intermediate layer.
4) Pasting a high-viscosity high-strength adhesive tape onto the surface of the sealing layer of the sample 2.
5) Tearing off the high-viscosity high-strength adhesive tape from the surface of the sample 2 slowly at an angle of 90° by using a high-speed tensile testing machine, so as to implement interfacial separation between the sealing layer and the intermediate layer.

6) Recording a stable tensile force at the time of the interfacial separation, and based on this, calculating the interfacial bonding force between the sealing layer and the intermediate layer.

Testing the interfacial bonding force F2 between the sealing layer and the outer package

1) Removing a sealed region portion from the electrode assembly, and using the portion as sample 1.
2) Cooling the sample 1 in liquid nitrogen, and grinding off the intermediate layer at one side of the sealing layer to expose the interface between the sealing layer and the outer package.
3) Cutting the sample 1 into a test strip 8 mm wide and 6 cm long to obtain a sample 2 so that in the region of the test strip, the sealing layer fully overlays the outer package.
4) Pasting a high-viscosity high-strength adhesive tape onto a surface of an adhesive layer of the sample 2.
5) Tearing off the high-viscosity high-strength adhesive tape from the surface of the sample 2 slowly at an angle of 90° by using a high-speed tensile testing machine, so as to implement interfacial separation between the sealing layer and the outer package.
6) Recording a stable tensile force at the time of the interfacial separation, and based on this, calculating the interfacial bonding force between the sealing layer and the outer package.

Testing sealing strength

1) Removing a sealed region portion from the electrode assembly, and using the portion as sample 1.
2) Cutting the sample 1 into a test strip 8 mm wide to obtain a sample 2, so that the test strip fully preserves the entire sealed region and that the outer packages on both sides of the sealed region remain intact.
3) Tearing open the outer packages on both sides at an angle of 180° by using a high-speed tensile testing machine, so that the two layers of outer packages in the sealed region are separated from each other.
4) Recording a stable tensile force at the time of the separation between the two layers of outer packages, and based on this, calculating the sealing strength.

Testing breakage at a seal after dropping from a height of 1.5 m

1) Disassembling the tested sample of the electrode assembly, and removing the sealed region separately for use.
2) Adding red potion dropwise in the sealed region, so that the red potion stays above the sealed region in the space dimensions, and letting the red potion stand for 12 hours.
3) Then damaging the sealed region through a sealing strength test, and observing infiltration of the red potion into the sealed region.
4) If the depth at which the red potion infiltrates into the sealed region exceeds 1/2 of the width of the sealed region, it is determined that the seal is broken; or, if the depth is another value, it is determined that the seal is not broken.

Testing a discharge energy density

Leaving a lithium-ion battery to stand for 30 minutes at a normal temperature, charging the battery at a constant current of 0.05C until a voltage of 4.45 V (rated voltage in Comparative Embodiment 1) or 8.90 V (rated voltage in other comparative embodiments and all embodiments), and then discharging the electrochemical device at a rate of 0.05C until a voltage of 3.00 V (rated voltage in Comparative Embodiment 1) or 6.00 V (rated voltage in other comparative embodiments and all embodiments). Repeating the foregoing charge and discharge steps for 3 cycles to complete chemical formation of the to-be-tested electrochemical device. Charging the electrochemical device at a constant current of 0.1C until a voltage of 4.45 V (rated voltage in Comparative Embodiment 1) or 8.90 V (rated voltage in other comparative embodiments and all embodiments) after completion of the chemical formation, and then discharging the electrochemical device at a rate of 0.1C until a voltage of 3.00 V (rated voltage in Comparative Embodiment 1) or 6.00 V (rated voltage in other comparative embodiments and all embodiments). Recording the discharge capacity, and then calculating the energy density at the time of discharging at a rate of 0.1C.

$$\text{Energy density (Wh/L)} = \text{discharge capacity (Wh)/volume of the lithium-ion battery (L)}$$

Testing a $Q_{50}/Q_0$ ratio ($50^{th}$-cycle discharge capacity/first-cycle discharge capacity) (%)

Charging the battery at a constant current of 0.5C and a temperature of 25 °C until a voltage of 4.45 V (rated voltage in Comparative Embodiment 1) or 8.90 V (rated voltage in other comparative embodiments and all embodiments), charging the battery at a constant voltage until a current of 0.025C, leaving the battery to stand for 5 minutes, and then discharging the battery at a current of 0.5C until a voltage of 3.00 V (rated voltage in Comparative Embodiment 1) or 6.00 V (rated voltage in other comparative embodiments and all embodiments). Measuring the capacity of the battery at this time and recording the capacity as an initial capacity. Repeating the test of charging at 0.5C and discharging at 0.5C for 50 cycles, and calculating a ratio of the capacity of the lithium-ion battery to the initial capacity.

Testing 3C charging temperature rise

Charging the battery at a constant current of 3C and a temperature of 25 °C until a voltage of 4.45 V (rated voltage in Comparative Embodiment 1) or 8.90 V (rated voltage in other comparative embodiments and all embodiments), and then charging the battery at a constant voltage until a current of 0.025C. During the test, placing a thermocouple at a central position just above the battery cell to measure the changed temperature change in real time during the charging, and recording the measured temperature values, where the highest measured temperature value minus the test temperature of 25 °C is the 3C charging temperature rise.

Nail penetration test

Charging the to-be-tested lithium-ion battery at a constant current of 0.05C until a voltage of 4.45 V (rated voltage in Comparative Embodiment 1) or 8.90 V (rated voltage in other comparative embodiments and all embodiments), and then charging at a constant voltage until a current of 0.025C (cut-off current) so that the battery reaches a fully charged state, and recording the appearance of the battery before the nail penetration test. Performing a nail penetration test in an environment of 25±3 °C, where the nail is 4 mm in diameter, and the penetration speed is 30 mm/s, where one nail penetration position is 15 mm distant from the edge of the electrode assembly with an aluminum tab, and the other nail penetration position is 15 mm distant from the edge of the electrode assembly with a nickel tab. Stopping the nail penetration test when the test duration reaches 3.5 minutes or the surface temperature of the electrode assembly drops to 50 °C. Observing the battery status during the test by using 10 electrode assemblies as a group, determining pass of one test if the battery does not burn or explode, and determining pass of the nail penetration test if the battery passes at least 9 tests per 10 tests.

Table 1A Test parameters and test results in embodiments and comparative embodiments

| | Thickness compression rate of sealing layer (%) | Melting point or softening point of intermediate layer (°C) | Melting point or softening point of sealing layer (°C) | Temperature difference (°C) | Absolute value of width occupied by intermediate layer of sealed region in the sealed region (mm) | Percentage of width occupied by intermediate layer of sealed region in the sealed region | $F_1$ (N/cm) | $F_2$ (N/cm) | Ratio A | Intermediate layer | Sealing layer |
|---|---|---|---|---|---|---|---|---|---|---|---|
| Embodiment 1 | 70% | 270 | 150 | 120 | 4 | 100% | 21.8 | 17.1 | 0.91 | PET | PP |
| Embodiment 2 | 40% | 270 | 150 | 120 | 4 | 100% | 23.5 | 17.4 | 1.87 | PET | PP |
| Embodiment 3 | 20% | 270 | 150 | 120 | 4 | 100% | 22.8 | 17.4 | 4.34 | PET | PP |
| Embodiment 4 | 40% | 150 | 130 | 20 | 4 | 100% | 31.1 | 17.5 | 1.86 | PP | PP |
| Embodiment 5 | 40% | 334 | 150 | 184 | 4 | 100% | 28.4 | 17.4 | 1.88 | PI | PP |
| Embodiment 6 | 40% | 1440 | 240 | 1200 | 4 | 100% | 16.2 | 13.5 | 1.77 | Stainless steel | PS |
| Embodiment 7 | 40% | 334 | 150 | 184 | 4 | 100% | 28 | 17.3 | 1.88 | PI | PP |
| Embodiment 8 | 40% | 334 | 240 | 94 | 4 | 100% | 11.9 | 13.4 | 1.79 | PI | PS |
| Embodiment 9 | 70% | 334 | 150 | 184 | 3 | 100% | 23.7 | 14.4 | 0 | PI | PP |
| Embodiment 10 | 70% | 334 | 150 | 184 | 4 | 100% | 25.1 | 15.6 | 0.1 | PI | PP |
| Embodiment 11 | 40% | 334 | 150 | 184 | 4 | 100% | 29.2 | 17.9 | 1.5 | PI | PP |
| Embodiment 12 | 20% | 334 | 150 | 184 | 4 | 100% | 27.5 | 17 | 20 | PI | PP |

| | Thickness compression rate of sealing layer (%) | Melting point or softening point of intermediate layer (°C) | Melting point or softening point of sealing layer (°C) | Temperature difference (°C) | Absolute value of width occupied by intermediate layer of sealed region in the sealed region (mm) | Percentage of width occupied by intermediate layer of sealed region in the sealed region | $F_1$ (N/cm) | $F_2$ (N/cm) | Ratio A | Intermediate layer | Sealing layer |
|---|---|---|---|---|---|---|---|---|---|---|---|
| Embodiment 13 | 40% | 660 | 130 | 530 | 4 | 100% | 17.8 | 17.3 | 1.55 | Al | PP |
| Embodiment 14 | 40% | 3500 | 150 | 3350 | 4 | 100% | 12.1 | 17.4 | 1.52 | Carbon film | PP |
| Embodiment 15 | 40% | 334 | 150 | 184 | 4 | 100% | 29.6 | 18.1 | 1.51 | PI | PP |
| Embodiment 16 | 40% | 334 | 150 | 184 | 4 | 100% | 29.3 | 17.9 | 1.55 | PI | PP |
| Embodiment 17 | 40% | 334 | 150 | 184 | 4 | 100% | 29.1 | 17.8 | 1.48 | PI | PP |
| Embodiment 18 | 40% | 334 | 150 | 184 | 4 | 100% | 29.3 | 17.9 | 1.52 | PI | PP |
| Embodiment 19 | 40% | 1440 | 150 | 1290 | 4 | 100% | 22 | 17.3 | 1.5 | Stainless steel | PP |
| Embodiment 20 | 40% | 334 | 150 | 184 | 4 | 100% | 29.4 | 18 | 1.48 | PI | PP |
| Embodiment 21 | 40% | 334 | 150 | 184 | 4 | 100% | 29.3 | 17.9 | 1.53 | PI | PP |
| Embodiment 22 | 40% | 334 | 150 | 184 | 4 | 100% | 29.5 | 18.1 | 1.5 | PI | PP |
| Embodiment 23 | 40% | 334 | 150 | 184 | 4 | 100% | 29.4 | 17.9 | 1.53 | PI | PP |
| Embodiment 24 | 40% | 1440 | 150 | 1290 | 4 | 100% | 22.1 | 17.2 | 1.52 | Stainless steel | PP |

| | Thickness compression rate of sealing layer (%) | Melting point or softening point of intermediate layer (°C) | Melting point or softening point of sealing layer (°C) | Temperature difference (°C) | Absolute value of width occupied by intermediate layer of sealed region in the sealed region (mm) | Percentage of width occupied by intermediate layer of sealed region in the sealed region | $F_1$ (N/cm) | $F_2$ (N/cm) | Ratio A | Intermediate layer | Sealing layer |
|---|---|---|---|---|---|---|---|---|---|---|---|
| Embodiment 25 | 40% | 270 | 150 | 120 | 4 | 100% | 23.3 | 17.3 | 1.84 | PET | PP |
| Embodiment 26 | 40% | 1440 | 150 | 1290 | 4 | 100% | 22 | 17.2 | 1.5 | Stainless steel | PP |
| Embodiment 27 | 40% | 1440 | 150 | 1290 | 4 | 100% | 22.3 | 17.4 | 1.51 | Stainless steel | PP |
| Comparative Embodiment 1 | - | - | - | - | - | - | - | - | - | - | - |
| Comparative Embodiment 2 | - | - | - | - | - | - | - | - | - | - | - |
| Comparative Embodiment 3 | - | - | - | - | - | - | - | - | - | - | - |
| Comparative Embodiment 4 | - | - | - | - | - | - | - | - | - | - | - |
| Comparative Embodiment 5 | - | - | - | - | - | - | - | - | - | - | - |
| Comparative Embodiment 6 | - | 165 | - | - | - | - | - | - | - | - | - |

| | Thickness compression rate of sealing layer (%) | Melting point or softening point of intermediate layer (°C) | Melting point or softening point of sealing layer (°C) | Temperature difference (°C) | Absolute value of width occupied by intermediate layer of sealed region in the sealed region (mm) | Percentage of width occupied by intermediate layer of sealed region in the sealed region | $F_1$ (N/cm) | $F_2$ (N/cm) | Ratio A | Intermediate layer | Sealing layer |
|---|---|---|---|---|---|---|---|---|---|---|---|
| Comparative Embodiment 7 | - | 165 | - | - | - | - | - | - | - | - | - |
| Comparative Embodiment 8 | - | 334 | - | - | - | - | - | - | - | - | - |
| Comparative Embodiment 9 | - | 1440 | - | - | - | - | - | - | - | - | - |

EP 3 975 329 A1

Table 1B Test parameters and test results in embodiments and comparative embodiments

| | Sealing duration (s) | Sealing pressure (MPa) | Sealing temperature (°C) | Intermediate layer thickness (μm) | ED (Wh/L) | $Q_{50}/Q_0$ (%) | Sealing strength (N/cm) | Breakage rate in a drop test | 3C charging temperature rise (°C) | Pass rate of nail penetration test |
|---|---|---|---|---|---|---|---|---|---|---|
| Embodiment 1 | 1 | 0.1 | 160 | 20 | 589 | 85.90% | 17.2 | 3/20 | 11.1 | 7/10 |
| Embodiment 2 | 3 | 0.5 | 190 | 20 | 590 | 85.80% | 17.3 | 3/20 | 11 | 7/10 |
| Embodiment 3 | 10 | 0.8 | 200 | 20 | 588 | 85.70% | 17.5 | 3/20 | 11 | 7/10 |
| Embodiment 4 | 4 | 0.5 | 150 | 20 | 589 | 85.00% | 17.5 | 3/20 | 10.8 | 6/10 |
| Embodiment 5 | 3 | 0.5 | 190 | 20 | 590 | 85.80% | 17.3 | 3/20 | 11 | 8/10 |
| Embodiment 6 | 6 | 0.8 | 270 | 20 | 589 | 86.00% | 13.3 | 11/20 | 10.2 | 0/10 |
| Embodiment 7 | 3 | 0.5 | 190 | 20 | 590 | 85.80% | 17.4 | 3/20 | 11.1 | 8/10 |
| Embodiment 8 | 6 | 0.8 | 270 | 20 | 588 | 85.80% | 11.8 | 8/20 | 11 | 8/10 |
| Embodiment 9 | 1 | 0.1 | 160 | 20 | 589 | 85.90% | 14.6 | 5/20 | 11 | 8/10 |
| Embodiment 10 | 1 | 0.1 | 160 | 20 | 589 | 85.90% | 15.5 | 5/20 | 10.9 | 8/10 |
| Embodiment 11 | 3 | 0.5 | 190 | 20 | 589 | 85.90% | 18 | 2/20 | 11 | 8/10 |
| Embodiment 12 | 10 | 0.8 | 200 | 20 | 589 | 85.80% | 17.1 | 3/20 | 10.8 | 8/10 |
| Embodiment 13 | 3 | 0.5 | 190 | 20 | 588 | 86.10% | 17.2 | 10/20 | 10.2 | 0/10 |

(continued)

| | Sealing duration (s) | Sealing pressure (MPa) | Sealing temperature (°C) | Intermediate layer thickness (μm) | ED (Wh/L) | $Q_{50}/Q_0$ (%) | Sealing strength (N/cm) | Breakage rate in a drop test | 3C charging temperature rise (°C) | Pass rate of nail penetration test |
|---|---|---|---|---|---|---|---|---|---|---|
| Embodiment 14 | 3 | 0.5 | 190 | 20 | 589 | 86.00% | 17.2 | 14/20 | 10.4 | 0/10 |
| Embodiment 15 | 3 | 0.5 | 190 | 1000 | 505 | 86.10% | 18 | 2/20 | 10.1 | 10/10 |
| Embodiment 16 | 3 | 0.5 | 190 | 10 | 591 | 85.80% | 17.8 | 3/20 | 11.2 | 8/10 |
| Embodiment 17 | 3 | 0.5 | 190 | 2 | 592 | 85.10% | 17.7 | 5/20 | 11.4 | 4/10 |
| Embodiment 18 | 3 | 0.5 | 190 | 20 | 591 | 85.80% | 18.1 | 2/20 | 11 | 8/10 |
| Embodiment 19 | 3 | 0.5 | 190 | 20 | 593 | 86.00% | 17.5 | 8/20 | 10.3 | 0/10 |
| Embodiment 20 | 3 | 0.5 | 190 | 20 | 593 | 85.90% | 18 | 2/20 | 11.1 | 8/10 |
| Embodiment 21 | 3 | 0.5 | 190 | 20 | 579 | 85.90% | 17.8 | 2/20 | 10.9 | 8/10 |
| Embodiment 22 | 3 | 0.5 | 190 | 20 | 581 | 85.80% | 18.2 | 2/20 | 11 | 8/10 |
| Embodiment 23 | 3 | 0.5 | 190 | 20 | 583 | 85.80% | 18 | 2/20 | 11 | 8/10 |
| Embodiment 24 | 3 | 0.5 | 190 | 20 | 593 | 85.90% | 17.5 | 9/20 | 10.1 | 0/10 |
| Embodiment 25 | 3 | 0.5 | 190 | 20 | 581 | 86.30% | 17.2 | 3/20 | 11.1 | 7/10 |
| Embodiment 26 | 3 | 0.5 | 190 | 20 | 582 | 86.30% | 17.5 | 9/20 | 10.1 | 0/10 |

| | Sealing duration (s) | Sealing pressure (MPa) | Sealing temperature (°C) | Intermediate layer thickness ($\mu$m) | ED (Wh/L) | $Q_{50}/Q_0$ (%) | Sealing strength (N/cm) | Breakage rate in a drop test | 3C charging temperature rise (°C) | Pass rate of nail penetration test |
|---|---|---|---|---|---|---|---|---|---|---|
| Embodiment 27 | 3 | 0.5 | 190 | 20 | 583 | 86.20% | 17.4 | 10/20 | 10.0 | 0/10 |
| Comparative Embodiment 1 | - | - | - | - | 593 | 86.30% | 16.4 | 2/20 | 13.2 | 0/10 |
| Comparative Embodiment 2 | - | - | - | - | 556 | 85.90% | 16.5 | 2/20 | 10.5 | 0/10 |
| Comparative Embodiment 3 | - | - | - | - | 549 | 85.40% | 16.4 | 5/20 | 10.5 | 0/10 |
| Comparative Embodiment 4 | - | - | - | - | 575 | 85.50% | 16.3 | 5/20 | 10.4 | 0/10 |
| Comparative Embodiment 5 | - | - | - | - | NG | NG | 16.4 | NG | NG | NG |
| Comparative Embodiment 6 | 3 | 0.5 | 190 | 20 | NG | NG | 16.2 | NG | NG | NG |
| Comparative Embodiment 7 | 3 | 0.5 | 190 | 20 | 589 | 85.00% | 15.3 | 6/20 | 10.9 | 6/10 |
| Comparative Embodiment 8 | 3 | 0.5 | 190 | 20 | 589 | 85.60% | 3.2 | 16/20 | 11 | 8/10 |

(continued)

| | Sealing duration (s) | Sealing pressure (MPa) | Sealing temperature (°C) | Intermediate layer thickness ($\mu$m) | ED (Wh/L) | $Q_{50}/Q_0$ (%) | Sealing strength (N/cm) | Breakage rate in a drop test | 3C charging temperature rise (°C) | Pass rate of nail penetration test |
|---|---|---|---|---|---|---|---|---|---|---|
| Comparative Embodiment 9 | 3 | 0.5 | 190 | 20 | 589 | 85.80% | 4.7 | 20/20 | 10.3 | 0/10 |

As shown in Table 1A and Table 1B (in which "NG" means "not measured"), in contrast with Comparative Embodiments 2~4, the energy density of the embodiments of the present invention is increased except Embodiment 15. Evidently, the lithium-ion battery with a partition plate serial-connection structure according to the embodiments of the present invention achieves a higher energy density than the following lithium-ion batteries available in the prior art: a lithium-ion battery in which two independent electrode assemblies are serial-connected externally, a lithium-ion battery in which two independent electrode assemblies are serial-connected in tandem, and a lithium-ion battery in which two independent electrode assemblies are serial-connected alongside.

In contrast with Comparative Embodiments 1 to 9, the sealing strength of Embodiments 1~5, 7, 11~27 of the present invention is increased, and the pass rate of the nail penetration test in Embodiments 1~5, 7~12, 15~16, 18, 20~23, and 25 is higher than that of Comparative Embodiments 1~4 and 9.

In contrast with Comparative Embodiments 1~2, the breakage ratio of a drop test in Embodiments 1~10, 12~14, 16~17, 19, and 24~27 of the present invention is increased, but the discharge voltage of the lithium-ion battery with a single electrode assembly in Comparative Embodiment 1 is low. In the lithium-ion battery in which two independent electrode assemblies are serial-connected externally in Comparative Embodiment 2, the discharge voltages of the two electrode assemblies need to be close to each other. If the discharge voltages are not close to each other, a short circuit is likely to occur. In addition, Embodiments 11, 15, 18, and 20~23 of the present invention still obtain the same breakage rate in a drop test as that of Comparative Embodiments 1~2. In contrast with Comparative Embodiments 3~4, the breakage rate in a drop test of embodiments 1~5, 7, 11~12, 15~18, 20~23, and 25 of the present invention is decreased. This indicates that the breakage rate in a drop test is lower than the following lithium-ion batteries available in the prior art: a lithium-ion battery in which two independent electrode assemblies are serial-connected in tandem, and a lithium-ion battery in which two independent electrode assemblies are serial-connected alongside. In contrast with Comparative Embodiments 8~9, the breakage rate in a drop test of the embodiments of the present invention is significantly decreased, indicating that the partition plate prepared according to the present invention and applied to a lithium-ion battery is highly resistant to breakage when dropping.

In contrast with Comparative Embodiments 2~4 and 7~9, the charging temperature rise in the embodiments of the present invention basically does not change except that the 3C charging temperature rise in the embodiments of the present invention is lower than that of a single-electrode lithium-ion battery prepared in Comparative Embodiment 1.

In contrast with the comparative embodiments, the ratio of the 50th-cycle discharge capacity to the first-cycle discharge capacity in the embodiments of the present invention basically does not change.

Evidently, when being applied to a lithium-ion battery, the partition plate prepared according to the present invention improves the sealing reliability of the lithium-ion battery and achieves good technical effects.

The foregoing descriptions are merely exemplary embodiments of the present invention, but are not intended to limit the present invention. Any modifications, equivalent substitutions, and improvements made without departing from the spirit and principle of the present invention fall within the protection scope of the present invention.

**Claims**

1. A partition plate for use in an electrochemical device, wherein the partition plate is ion-insulative and comprises an intermediate layer and a sealing layer, and the sealing layer is located on an upper surface and a lower surface of the intermediate layer;

   a material of the intermediate layer comprises at least one of a carbon material, a first polymer material, or a metal material;
   a material of the sealing layer comprises a second polymer material; and
   a temperature at which the sealing layer starts to soften is at least 10 °C lower than a temperature at which the intermediate layer starts to soften.

2. The partition plate according to claim 1, wherein peripheral edges of the two surfaces of the intermediate layer are overlaid with the sealing layer, and an area of the sealing layer is 30% to 100% of an area of the intermediate layer.

3. The partition plate according to claim 2, wherein at least one surface of the intermediate layer is fully overlaid with the sealing layer.

4. The partition plate according to claim 1, wherein the carbon material comprises at least one of carbon felt, carbon film, carbon black, acetylene black, fullerene, conductive graphite film, or graphene film.

5. The partition plate according to claim 1, wherein the first polymer material comprises at least one of: polyethylene terephthalate, polybutylene terephthalate, polyethylene glycol naphthalate, polyether ether ketone, polyimide, polyamide, polyethylene glycol, polyamide imide, polycarbonate, cyclic polyolefin, polyphenylene sulfide, polyvinyl acetate, polytetrafluoroethylene, polymethylene naphthalene, polyvinylidene difluoride, polyethylene naphthalate, polypropylene carbonate, poly(vinylidene difluoride-hexafluoropropylene), poly(vinylidene difluoride-co-chlorotrifluoroethylene), organosilicon, vinylon, polypropylene, acid anhydride modified polypropylene, polyethylene, ethylene and a copolymer thereof, polyvinyl chloride, polystyrene, polyether nitrile, polyurethane, polyphenylene ether, polyester, polysulfone, amorphous $\alpha$-olefin copolymer, or a derivative of the foregoing substances.

6. The partition plate according to claim 1, wherein the metal material comprises at least one of Ni, Ti, Ag, Au, Pt, Fe, Co, Cr, W, Mo, Pb, In, Zn, or stainless steel.

7. The partition plate according to claim 1, wherein the second polymer material comprises at least one of: polypropylene, acid anhydride modified polypropylene, polyethylene, ethylene and a copolymer thereof, polyvinyl chloride, polystyrene, polyether nitrile, polyurethane, polyamide, polyester, amorphous $\alpha$-olefin copolymer, or a derivative of the foregoing substances.

8. The partition plate according to claim 1, wherein a thickness of the partition plate is 2 $\mu$m to 500 $\mu$m.

9. The partition plate according to claim 1, wherein the temperature at which the material of the intermediate layer starts to soften is higher than 130 °C.

10. The partition plate according to claim 1, wherein the temperature at which the material of the sealing layer starts to soften is 120 °C to 240 °C.

11. The partition plate according to claim 1, wherein the partition plate is **characterized by** at least one of:

    (a) a thickness of the partition plate is 5 $\mu$m to 50 $\mu$m;
    (b) the temperature at which the material of the intermediate layer starts to soften is higher than 150 °C; or
    (c) the temperature at which the material of the sealing layer starts to soften is 130 °C to 170 °C.

12. An electrochemical device, wherein the electrochemical device comprises at least one partition plate according to any one of claims 1 to 11, at least two electrode assemblies, an electrolytic solution, and an outer package, and the electrode assemblies are located in an independent hermetic chamber.

13. The electrochemical device according to claim 12, wherein an outermost layer of the electrode assemblies contains a separator, and the separator is adjacent to the partition plate.

14. The electrochemical device according to claim 12, wherein an outermost layer of at least one of the electrode assemblies contains a separator, and the separator is adjacent to the partition plate; and an outermost layer of at least one of the electrode assemblies contains a current collector, and the current collector is adjacent to the other side of the partition plate.

15. The electrochemical device according to claim 12, wherein the partition plate is electronically conductive, an outermost layer of the electrode assemblies contains a current collector, the current collector is adjacent to the partition plate, and current collectors of the electrode assemblies at two sides of the partition plate possess opposite polarities.

16. The electrochemical device according to claim 12, wherein the partition plate is electronically insulative, and an outermost layer of the electrode assemblies contains a current collector, and current collector is adjacent to the partition plate.

17. An electronic device, wherein the electronic device comprises the electrochemical device according to any one of claims 12 to 16.

FIG. 1

FIG. 2

FIG. 3

FIG. 4

FIG. 5

FIG. 6

FIG. 7

<div align="center">

**INTERNATIONAL SEARCH REPORT**

</div>

| | |
|---|---|
| | International application No. |
| | **PCT/CN2020/099432** |

| | |
|---|---|
| **A.** | **CLASSIFICATION OF SUBJECT MATTER** |
| | H01M 50/293(2021.01)i |

According to International Patent Classification (IPC) or to both national classification and IPC

| | |
|---|---|
| **B.** | **FIELDS SEARCHED** |

Minimum documentation searched (classification system followed by classification symbols)

  H01M

Documentation searched other than minimum documentation to the extent that such documents are included in the fields searched

Electronic data base consulted during the international search (name of data base and, where practicable, search terms used)

  VEN; USTXT; WOTXT; EPTXT; CNABS; CNTXT; CNKI: 电池, 隔板, 密封, 绝缘, 串联, 集流体, battery, cell, separator, seal, insulation, series, current collector

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | CN 105009353 A (SHENHUA GROUP CORPORATION LIMITED et al.) 28 October 2015 (2015-10-28)<br>  description, paragraphs 28-74, and figures 1-5 | 1-17 |
| X | CN 104143652 A (SHENHUA GROUP CORPORATION LIMITED et al.) 12 November 2014 (2014-11-12)<br>  description, paragraphs 28-67, and figures 1-4 | 1-17 |
| A | JP 2004185813 A (NISSAN MOTOR CO., LTD.) 02 July 2004 (2004-07-02)<br>  entire document | 1-17 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **17 March 2021** | **02 April 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2020/099432**

| Patent document cited in search report | | | Publication date (day/month/year) | Patent family member(s) | | | Publication date (day/month/year) |
|---|---|---|---|---|---|---|---|
| CN | 105009353 | A | 28 October 2015 | CN | 105009353 | B | 03 May 2017 |
| | | | | JP | 2016513855 | A | 16 May 2016 |
| | | | | US | 2016020481 | A1 | 21 January 2016 |
| | | | | US | 9979045 | B2 | 22 May 2018 |
| | | | | WO | 2014134783 | A1 | 12 September 2014 |
| | | | | JP | 6290936 | B2 | 07 March 2018 |
| CN | 104143652 | A | 12 November 2014 | CN | 104143652 | B | 04 May 2016 |
| JP | 2004185813 | A | 02 July 2004 | JP | 4178926 | B2 | 12 November 2008 |

Form PCT/ISA/210 (patent family annex) (January 2015)